# EUROPÄISCHE PATENTANMELDUNG

(11) **EP 2 339 415 A2**
(43) Veröffentlichungstag der Anmeldung: **29.06.2011**
(21) Anmeldenummer: 10013944.3
(22) Anmeldetag: 25.10.2010
(51) Int. Cl.: G05B 9/03

(54) **Steuersystem für Baumaschinen und Verfahren zum Betrieb des Steuersystems**

(30) Priorität: 23.12.2009 DE 102009060321
(71) Anmelder: Liebherr-Werk Ehingen GmbH, 89584 Ehingen/Donau (DE)
(72) Erfinder: Morath, Erwin, 89584 Lauterach (DE); Zink, Eduard, 72537 Mehrstetten (DE); Treuer, Joachim, 89584 Ehingen (DE)
(74) Vertreter: Laufhütte, Dieter

(57) **Zusammenfassung**

Die vorliegende Erfindung betrifft ein Steuersystem für eine Baumaschine, mit wenigstens einem Sensor und wenigstens einer Steuerung, wobei eine serielle Verbindung zwischen Sensor und der Steuerung besteht, und wobei mindestens ein Sensor und/oder eine Steuerung zwei- oder mehrkanalig ausgeführt sind. Ferner bezieht sich die Erfindung auf ein Verfahren zum Betrieb eines derartigen Steuersystems für eine Baumaschine.

## Beschreibung

Die vorliegende Erfindung betrifft ein Steuersystem für eine Baumaschine mit wenigstens einem Sensor und wenigstens einer Steuerung, wobei eine serielle Verbindung zwischen dem Sensor und der Steuerung besteht.

Um den strengen Anforderungen an die Sicherheit im Umgang mit komplexen Maschinen Herr zu werden, bedient man sich der Möglichkeit, wichtige Komponenten der Maschinen redundant oder diversitär auszulegen.

In diesem Zusammenhang ist für die sichere Arbeitsweise des Steuersystems einer Maschine der Datenübertrag vom Sensor zur verarbeitenden Steuerung zu betrachten, da der Sensor unter bestimmten Umständen für den sicheren Betrieb der Maschine relevante Meßgrößen aufnimmt. In diesem Bereich kann eine Redundanz notwendig werden, um die geforderten Sicherheitsbedingungen zu garantieren. Mögliche Fehler einzelner Komponenten der gesamten Meßkette lässen sich aufgrund der redundant vorliegenden Meßergebnisse erkennen.

Ziel der vorliegenden Erfindung ist es, die Sicherheit eines derartigen Steuersystems für eine Baumaschine zu erhöhen.

Erfindungsgemäß wird diese Aufgabe zunächst durch ein Steuersystem für eine Baumaschine mit den Merkmalen des Anspruchs 1 gelöst.

Demnach weist ein Steuersystem wenigstens einen Sensor und wenigstens eine Steuerung auf, wobei wenigstens ein Sensor über eine serielle Verbindung mit der Steuerung verbunden ist. Das System weist also einen oder mehrere Sensoren auf, die eine oder verschiedene Meßgrößen erfassen und diese über die serielle Verbindung an wenigstens eine Steuerung übermitteln. Die Steuerung dient als Steuer-und/oder Regeleinheit zum Betrieb der Baumaschine, die auf der Grundlage der erfaßten und ausgewerteten Meßwerte wenigstens eines Sensors arbeitet. Es können ein oder mehrere Steuerungen zur Übernahme gleicher oder verschiedener Aufgaben vorgesehen sein. Erfindungsgemäß sind mindestens ein Sensor und/oder eine Steuerung des Steuersystems jeweils zwei- oder mehrkanalig ausgeführt. Während einkanalige Systeme in der Regel auf Fehler mit einem Versagen reagieren, so können zwei- oder mehrkanalige Systeme eine interne Prüfung vornehmen und eventuelle Fehler in der Be- oder Verarbeitung erkennen. Zum einen ist wenigstens ein Sensor zwei- oder mehrkanalig ausgeführt, so dass der erfaßte Meßwert sicher und redundant vorliegt. Zum anderen ist die Steuerung zwei- oder mehrkanalig ausgeführt, so dass eine sichere und redundante Meßwertverarbeitung ermöglicht ist.

Vorteilhafterweise weist ein derartiger Sensor mindestens zwei Meßwertaufnehmer und wenigstens zwei Verarbeitungseinheiten innerhalb des Sensorgehäuses auf. Der Meßwertaufnehmer ist als erster Teil des Sensors definiert, der auf eine zu erfassende Meßgröße unmittelbar anspricht. Bevorzugt steht jeder Meßwertaufnehmer über eine Signalleitung mit genau einer Verarbeitungseinheit in Verbindung, so dass die den Meßwert repräsentierende Signalgröße an die Verarbeitungseinheit übertragbar ist. Zur Steigerung der Zuverlässigkeit bzw. Sicherheit des Sensors, sind sowohl die Meßwertaufnehmer als auch die Verarbeitungseinheiten redundant und/oder diversitär ausgeführt. Mindestens zwei Meßwertaufnehmer nehmen unabhängig voneinander mindestens zwei Meßwerte auf und übermitteln diese an ihre angeschlossene Verarbeitungseinheit. Die erfindungsgemäße Anordnung der wenigstens zwei Meßwertaufnehmer in einem Sensorgehäuse mit nur einer Prüflingszuführung garantiert, dass die tatsächlichen Istwerte der zu überprüfenden Meßgröße ohne zeitlichen Versatz an beiden Meßwertaufnehmern anliegen. Bevorzugt sind die Meßwertaufnehmer und/oder die Verarbeitungseinheiten diversitär ausgeführt.

Die bevorzugte minimal beabstandete Anordnung der beiden Meßwertaufnehmer im Sensorgehäuse reduziert den zeitlichen Versatz der erfaßten Meßwerte erheblich bzw. schließt den Zeitversatz nahezu aus. Besonders bevorzugt sind alle Meßwertaufnehmer mit gleichem Abstand zur Eintrittsöffnung der Prüflingszuführung angeordnet. Demnach stellt sich eine Änderung der Meßgröße zeitgleich an allen Meßwertaufnehmern ein. Ferner stellt der erfindungsgemäße Sensor eine einfache Umsetzungsmöglichkeit eines redundant ausgelegten Sensorsystems dar, da die Redundanz bereits im Sensorgehäuse integriert ist. Eine komplexe Anordnung mehrerer separater unabhängiger Sensoren ist nicht erforderlich.

Besonders bevorzugt sind die mindestens zwei Meßwertaufnehmer unmittelbar nebeneinander innerhalb oder im Endbereich der Prüflingszuführung des Sensors angeordnet. Denkbar ist auch, dass die Meßwertaufnehmer an gegenüberliegenden Stellen innerhalb der Prüflingszuführung angebracht sind. Je geringer die räumliche Distanz zwischen zwei Meßwertaufnehmer ist, desto geringer ist die zeitlich verzögerte Erfassung des Istwertes der Meßgröße. Durch die erfindungsgemäße Anordnung läßt sich der Zeitversatz zwischen der Aufnahme der Istwerte vernachlässigen. Bei fehlerfreier Funktionalität des Sensors ergeben sich nahezu zeitgleich anliegende Istwerte an den Ausgängen der Meßwertaufnehmer.

Ist das Meßergebnis von externen Störgrößen abhängig, so sind bevorzugt ein oder mehrere Sekundärsensoren innerhalb des Sensorgehäuses angeordnet. Denkbar sind geeignete Temperatursensoren bzw. Sensoren zur Erfassung des atmosphärischen Drucks. Insbesondere fließen die von den Sekundärsensoren bereitgestellten Meßwerte der Verarbeitungseinheit zu. Vorteilhafterweise sind hierdurch äußere Einflüsse auf den Sensor mittels der von den Sekundärsensoren zur Verfügung gestellten Meßdaten kompensierbar.

Vorteilhafterweise sind die wenigstens zwei Verarbeitungseinheiten miteinander gekoppelt. Wenigstens zwei Verarbeitungseinheiten arbeiten bevorzugt auf Basis einer gemeinsamen Taktquelle oder verwenden separate Taktquellen, die miteinander synchronisierbar sind. Die Verwendung einer gemeinsamen Zeitbasis bzw. die synchronisierte Signalverarbeitung der Verarbeitungseinheiten reduziert bzw. optimiert den zeitlichen Versatz der an den Ausgängen der Verarbeitungseinheiten anliegenden Meßwerte. Der gegenseitige Austausch der Meßwerte der einzelnen Verarbeitungseinheiten oder sonstiger Daten ist bevorzugt über die Signalverbindung zwischen den Verarbeitungseinheiten realisiert. Folglich stellt jede Verarbeitungseinheit ihren ermittelten Meßwert einer oder allen weiteren Verarbeitungseinheiten zur Verfügung. Es ist denkbar, dass innerhalb wenigstens einer Verarbeitungseinheit ein Mittel vorgesehen ist, wodurch wenigstens ein erster Meßwert mit wenigstens einem weiteren Meßwert vergleichbar ist. Weiterhin ist es denkbar, dass wenigstens eine Verarbeitungseinheit ihren eigenen Meßwert mit den Meßwerten aller weiteren verbundenen Verarbeitungseinheiten vergleicht.

Besonders bevorzugt ist das Mittel derart ausgeführt, dass eine Plausibilitätsprüfung, insbesondere ein Kreuzvergleich, zwischen mindestens zwei Meßwerten durchführbar ist. Liegen die Abweichungen innerhalb definierbarer Toleranzgrenzen, wird die Messung als plausibel eingestuft und die wenigstens zwei Verarbeitungseinheiten einigen sich auf einen einheitlichen für alle oder zumindest einen Teil der Verarbeitungseinheiten geltenden Meßwert. Dieser wird sodann im Ausgangsbereich aller oder einem Teil der Verarbeitungseinheiten als Binärwert abgelegt. Beispielsweise vergleichen zwei Verarbeitungseinheiten ihre Meßwerte miteinander. Im Falle nur geringer tolerierbarer Abweichungen legt die erste Verarbeitungseinheit ihren Meßwert im Ausgangsbereich ab und die zweite oder alle weiteren Verarbeitungseinheiten verwerfen ihre eigenen Meßwerte und legen statt dessen den einheitlichen Meßwert der ersten Verarbeitungseinheit in ihrem Ausgangsbereich ab. Die Bitmuster der abgelegten Werte sind demnach in allen Ausgangsbereichen identisch. Liegen die Abweichungen der beiden verglichenen Meßwerte außerhalb des definierbaren Toleranzbereichs, so ist das Meßergebnis wenigstens einer Verarbeitungseinheit als fehlerhaft markierbar. Die gekennzeichneten Meßwerte sind im Ausgangsbereich der wenigstens zwei Verarbeitungseinheiten ablegbar und über die serielle Verbindung an die Steuerung übertragbar. Die Steuerung kann aufgrund der Markierung auf eine Fehlfunktion des Sensors schließen.

Das Mittel wenigstens einer Verarbeitungseinheit ist besonders bevorzugt durch einen programmierbaren Mikroprozessor bzw. Digitalen-Signal-Prozessor (DSP) realisiert. Die Kopplung der Verarbeitungseinheiten bzw. der Mikroprozessoren ist durch die zentrale Taktspeisung der Mikroprozessoren gegeben. Die Synchronisation der verwendeten Mikroprozessoren minimiert den zeitlichen Versatz zwischen den Meßwerten, da sämtliche Verarbeitungsoperationen innerhalb der Mikroprozessoren zeitgleich bzw. synchron zueinander ausführbar sind. Die einzelnen Istwerte der Meßgröße sind demnach nahezu zeitgleich innerhalb der Mikroprozessoren auswertbar und ausgebbar.

In einer besonders bevorzugten Ausgestaltung der Erfindung weist wenigstens eine Steuerung wenigstens zwei redundant und/oder diversitär zueinander angeordnete Steuereinheiten auf. Die Steuereinheiten realisieren die zwei- oder mehrkanalige Ausführung der Steuerung und sind über ein internes beliebiges Bussystem miteinander verknüpft. Demnach ist die Kommunikation bzw. der Datenaustausch zwischen den einzelnen Steuereinheiten ermöglicht. Die Steuereinheiten verarbeiten unabhängig oder abhängig voneinander die empfangenen Daten. Die ausgewerteten Daten liegen folglich redundant innerhalb der Steuerung vor, und es lassen sich gezielte Maßnahmen auf Basis der redundant vorliegenden Informationen durch die Steuerung ergreifen.

Es kann vorgesehen sein, dass die serielle Verbindung zwischen wenigstens einem Sensor und wenigstens einer Steuerung ein Bussystem, insbesondere ein CAN-Bussystem, Liebherr-System-Bus oder Ethernet basierendes Bussystem ist. Die Busteilnehmer lassen sich in Busmaster, Busbeobachter und Sensoren unterteilen. Von Vorteil ist es, wenn die Steuerung als Busmaster fungiert. Denkbar ist es, dass wenigstens einer oder mehrere Busmaster vorgesehen sind, die einer oder mehreren Steuerungen zugeordnet sein können. Die in die Verarbeitungseinheit wenigstens eines Sensors vorzugsweise integrierte Sende- und/oder Empfangseinheit legt die ermittelten Meßwerte bzw. die verarbeiteten Meßsignale auf den Bus. Es kann vorgesehen sein, dass die Verarbeitungseinheit parallel zum Sendeprozess das gesendete Signal auf Richtigkeit prüft. Die Verarbeitungseinheit hört demnach gleichzeitig ihr übertragenes Signal ab. Möglich ist es, dass sämtliche Verarbeitungseinheiten des Sensors an das Bussystem angeschlossen sind. In diesem Fall sendet eine Verarbeitungseinheit ihr Signal über den Bus und alle weiteren Verarbeitungseinheiten hören das von der einen Verarbeitungseinheit auf den Bus gelegte Sendesignal mit und überprüfen dieses auf Richtigkeit bzw. stellen einen Vergleich zwischen Bussignal und ihrem Erwartungswert an. Besonders bevorzugt zieht wenigstens eine Verarbeitungseinheit im Fall einer Fehlerdetektion das entsprechende Bussignal für eine bestimmte Zeit, insbesondere 512 µs, auf Masse. Dies entspricht dem korrespondierenden Timeout des Übertragungsprotokolls des verwendeten Bussystems, wodurch alle am Bus anliegenden Signale innerhalb der Empfangseinheiten für ungültig erklärt bzw. verworfen werden.

Es ist vorstellbar, dass Mittel innerhalb wenigstens eines Sensors zur Verschlüsselung bzw. Verpackung des zu übertragenden Meßwerts vorgesehen sind. Denkbar ist die Anwendung geeigneter Datenverarbeitungsalgorithmen auf den digitalisierten Meßwert, wie CRC und/oder CRT-Algorithmen. Der Meßwert wird bereits innerhalb des Sensors verschlüsselt und über das Bussystem an die Steuerung übertragen. Ferner sind bevorzugt Mittel zum Entschlüsseln bzw. Entpacken des Meßwerts innerhalb wenigstens einer Steuerung vorgesehen. Demnach besteht auf Empfängerseite die Möglichkeit, aufgetretene Verarbeitungsfehler des Meßwerts bzw. der Datenübertragung mittels der Verschlüsselung zu erkennen und vorteilhafterweise zu korrigieren.

Erfindungsgemäß wird die eingangs genannte Aufgabe durch ein Verfahren zum Betrieb des zuvor beschriebenen Steuersystems für eine Baumaschine mit den in Anspruch 9 wiedergegebenen Verfahrensschritten gelöst.

Entsprechend der erfindungsgemäßen Verfahrensabfolge wird zunächst eine Meßgröße von wenigstens einem Sensor redundant und/oder diversitär erfaßt und verarbeitet sowie intern auf Richtigkeit überprüft und anschließend in einem Datenpaket des Meßwertprotokolls abgelegt, das durch das Mittel des Sensors zur Ausführung der Sicherheits- und/oder Schutzfunktion mit einer Sicherheitsinformation versehen wird. Des weiteren wird das Datenpaket über die serielle Verbindung an eine Steuerung übermittelt. Auf der Empfängerseite bzw. innerhalb der Steuerung wird das Datenpaket bzw. der Meßwert durch die redundant und/oder diversitär ausgelegte Steuerung mittels der Sicherheits- und/oder Schutzfunktion auf Richtigkeit, insbesondere auf eine fehlerfreie Übertragung überprüft und ausgewertet.

Gemäß einer besonderen Ausgestaltung des Verfahrens wird für jeden Kanal wenigstens eines Sensors eine individuelle Sensorbeschreibung gespeichert. Diese Sensorbeschreibung stellt eine eindeutige und individuelle Kennzeichnung jedes eingesetzten Sensors dar. Die Daten sind in allen Kanälen des Sensors, insbesondere innerhalb der Verarbeitungseinheiten, herstellerseitig fest abgelegt. Auf Grundlage der Sensorbeschreibung ist mittels eines spezifizierten Algorithmus ein individueller Schlüssel für jeden Sensor berechenbar. Demnach besitzt jeder Sensor des Steuersystems einen eindeutig identifizierbaren und zugeordneten Schlüssel, der bevorzugt bei der Übertragung des Meßwerts vom Sensor zur Steuerung ergänzend übermittelt wird. Die Sensorbeschreibung kann zyklisch von der Steuerung angefordert werden um die Funktionalität des Sensors zu überwachen.

Vorteilhaft ist es, wenn wenigstens eine Steuerung als Busmaster wirkt und eine Statusabfrage für jeden Sensor initiiert. Die Statusabfrage kann beispielsweise zyklisch durchgeführt werden. Als Antwort überträgt jeder Sensor seine Sensorzustandsbeschreibung in einem Datenpaket eines eigenständigen Protokolls über das Bussystem an die anfragende Steuerung. Die Sensorzustandsbeschreibung wird über entsprechende Diagnoseverfahren intern in jedem Kanal bzw. jeder Verarbeitungseinheit des Sensors ermittelt. Die Wiederholungsrate der Statusabfrage ist variabel definierbar und bevorzugt an die gestellten Sicherheitsanforderungen angepaßt.

Vorteilhaft ist es weiterhin, wenn die Steuerung als Busmaster den Meßwert wenigstens eines Sensors mittels des Meßwertprotokolls anfordert. Der Meßwert wird bevorzugt ausschließlich auf Anforderung der Steuerung bzw. des Busmasters vom Sensor zur Steuerung innerhalb eines Datenpakets übertragen. Durch Beachtung der erforderlichen Sicherheitsbestimmungen kann die Übertragung eines einzigen Meßwerts bzw. Datenpakets mehrfach erfolgen. Zur Übertragung wird das dafür vorgesehene Meßwertprotokoll verwendet. Dieses generiert vorzugsweise aus dem Meßwert, einem Zeitstempel und einer codierten Sicherheitsinformation ein Datenpaket, wobei die codierte Sicherheitsinformation mittels der Sicherheits- und/oder Schutzfunktion zweckmäßig aus dem Meßwert, dem Zeitstempel und dem individuellen Schlüssel des Sensors berechnet wird. Mit Hilfe der Sicherheits- und/oder Schutzfunktion lassen sich nach Auswertung der Inhalte der übermittelten Datenpakete mögliche Datenmanipulationen bzw. Übertragungsfehler empfängerseitig erkennen und besonders bevorzugt korrigieren. Hierzu werden die Inhalte der Antwortdaten der Statusabfrage bzw. der Meßwertabfrage benötigt und gemeinsam miteinander verarbeitet, da diese Informationen für die Überprüfung erforderlich sind. Gemäß einer besonderen Ausgestaltung des Verfahrens wird der individuelle Schlüssel zur Verifizierung der übermittelten Datenpakete, insbesondere der Meßwerte und der Sensorzustandsbeschreibung, verwendet.

Möglich ist es, dass eine Steuereinheit der Steuerung Daten wenigstens eines Sensors über das Bussystem empfängt und Kopien der Daten bzw. der Datenpakete an alle weiteren Steuereinheiten der Steuerung weiterleitet. Der Inhalt des empfangenen Datenpakets wird redundant von den einzelnen Steuereinheiten verarbeitet und überprüft. Eine erfolgreiche Überprüfung wird bevorzugt von jeder einzelnen Steuereinheit positiv bestätigt. Die Überprüfung des empfangenen Meßwerts bzw. des Datenpakets erfolgt bevorzugt durch die Verifizierung der Daten auf Grundlage der Sicherheits- und/oder Schutzfunktion.

Es gilt grundsätzlich, dass die eingesetzten Sensoren mindestens zwei Meßwertaufnehmer für beliebig zu erfassende Meßgrößen aufweisen. Bevorzugt eignet sich wenigstens ein Sensor zur Messung einer oder mehrerer verschiedener Meßgrößen wie Druck, Winkel, Drehung, Neigung, Länge, Entfernung, Schall, Helligkeit, Feuchtigkeit, Richtung oder Füllstand. Die Kompatibilität des Sensors ist lediglich von dem oder den verbauten Meßwertaufnehmern abhängig. Ferner ist es zweckmäßig die Prüflingszuführung an die zu erfassende Meßgröße bzw. das Medium anzupassen. Die Art der Meßwertverarbeitung ist bevorzugt bei allen Sensoren identisch. Alle Sensoren weisen bevorzugt wenigstens zwei redundant und/oder diversitär zueinander angeordnete Meßwertaufnehmer und/oder Verarbeitungseinheiten auf. Mögliche Ausführungsformen der Sensoren sind Seillängengeber, Lasersensoren, Drehwinkelmesser, Neigungsmesser und Längenmesser über Drehgeber.

Weitere Merkmale, Einzelheiten und Vorteile der Erfindung werden anhand eines in den Zeichnungen dargestellten Ausführungsbeispiels näher erläutert. Es zeigen:
- Figur 1:: eine schematische Darstellung eines Sensors am Beispiel eines Drucksensors,
- Figur 2:: eine schematische Darstellung eines Ausführungsbeispiel des erfindungsgemäßen Steuersystems und
- Figur 3:: das Übertragungsprotokoll des Steuersystems.

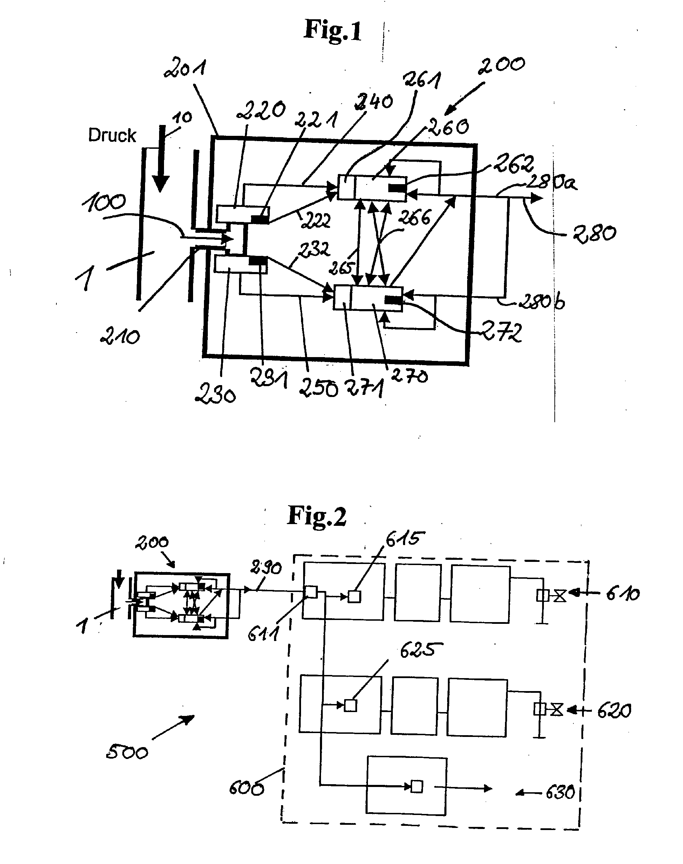

Figur 1 zeigt den schematischen Aufbau eines im erfindungsgemäßen Steuersystem eingesetzten Sensors 200. Im dargestellten Ausführungsbeispiel der Figur 1 arbeitet der zweikanalig redundant ausgelegte Sensor 200 als Drucksensor zur Erfassung des hydraulischen Drucks des Mediums innerhalb der Leitung 1. Das Gewinde am Sensorgehäuse 201 des Sensors 200 wird in die passende Schraubverbindung der Druckleitung 1 eingeschraubt. Bei der Befüllung der Leitung 1 mit Hydrauliköl oder einem ähnlichen Druckmedium wird auch der Raum der Prüflingszuführung 210 bis zu den darin angeordneten Meßwertaufnehmer 220, 230 befüllt. Die Meßwertaufnehmer 220, 230 wandeln die erfaßte Druckmeßgröße (Istwert) innerhalb der Prüflingszuführung 210 in entsprechende elektrische Signale um, welche über die beiden Signalleitungen 240, 250 den Eingängen 261, 271 der beiden Verarbeitungseinheiten 260, 270 zugeführt werden. Eine geschickte Lageauswahl der beiden Meßwertaufnehmer 220, 230 besteht darin, eine Anordnung der Meßwertaufnehmer 220, 230 mit möglichst kurzen und gleich langen Abständen zur Eintrittsöffnung der Prüflingszuführung 210 zu wählen. An beiden Meßwertaufnehmern 220, 230 stellen sich zeitgleich identische Meßwerte ein. Demnach wird der erste Kanal durch den Meßwertaufnehmer 220 sowie die Verarbeitungseinheit 260 gebildet und der zweite Kanal umfaßt den Meßwertaufnehmer 230 und die Verarbeitungseinheit 270.

Zur Erfassung von umweltbedingten Störgrößen weist jeder Meßwertaufnehmer 220, 230 jeweils einen Sekundärsensor 221, 231 auf. Es sind auch mehrere Sekundärsensoren zur Erfassung einer oder unterschiedlicher Störgrößen, wie beispielsweise Temperatur oder Luftdruckeinflüsse, möglich. Aufgrund der großen Nähe der Sekundärsensoren 221, 231 würde technisch auf Kosten der Redundanz auch ein Sekundärsensor 221, 231 ausreichen. Die ermittelten Störeinflüsse werden zur Störgrößenkompensierung an die Eingänge 261, 271 der zuständigen Verarbeitungseinheiten 260, 270 über die Signalleitungen 222, 232 übertragen. Beide Sekundärsensoren 221, 231 sind als Temperatursensoren ausgeführt, um temperaturabhängige Meßschwankungen des Sensors 200 zu kompensieren. Die Ausführung als Drucksensor, der den vorherrschenden atmosphärischen Druck auf den Sensor 200 bzw. innerhalb des Sensorgehäuses 201 erfaßt und zur Kompensierung weiterleitet, ist ebenfalls möglich.

Während des Betriebs des Sensors 200 liefern die Meßwertaufnehmer 220, 230 sowie die Sekundärsensoren 221, 231 kontinuierlich Meßsignale über die Signalleitungen 240, 250, 222, 232 an die entsprechenden Eingänge 261, 271 der beiden Verarbeitungseinheiten 260, 270.

Die beiden Verarbeitungseinheiten 260, 270 sehen eine integrierte Schaltkreisanordnung vor, deren wesentlicher Bestandteil ein programmierbarer Mikroprozessor bzw. DSP ist. Die wesentliche Aufgabe des Prozessors besteht darin, die an den Eingängen 261, 271 anliegenden elektrischen Meßsignale der Meßwertaufnehmer 220, 230 sowie der Sekundärsensoren 221, 231 zu verarbeiten. Zum einen erfolgt die Analog-Digital-Wandlung der anliegenden Werte, zum anderen stellt jede Verarbeitungseinheit 260, 270 ihren eigenen gewandelten Meßwert der anderen Verarbeitungseinheit über die Verbindung 266 zur Verfügung. Zur Überwachung der ordnungsgemäßen Funktionalität des Sensors erfolgt innerhalb der Verarbeitungseinheiten 260, 270 eine Plausibilitätsprüfung der vorliegenden Meßwerte nach der Methode des Kreuzvergleichs. Da die jeweiligen Meßwerte zeitabhängig und kontinuierlich an den Eingängen 261, 271 der beiden Verarbeitungseinheiten 260, 270 anliegen, arbeiten die beiden Verarbeitungseinheiten 260, 270 zweckmäßig mit einer gemeinsamen Zeitbasis 265. Beide Mikroprozessoren werden entweder durch eine gemeinsame Taktquelle gespeist oder verwenden separate Taktquellen, die miteinander synchronisiert sind. Entscheidend ist die Verwendung einer gemeinsamen Zeitbasis 265.

Falls die Abweichungen der Meßwerte die definierbaren Toleranzgrenzen nicht überschreiten, wird die Messung als plausibel eingestuft. Ein Meßwert, in der Regel der von der Verarbeitungseinheit 260, wird daraufhin von beiden Verarbeitungseinheiten 260, 270 als Meßwert aufgenommen und sodann im Ausgangsbereich 262, 272 zur Übertragung abgelegt. Somit sind nach der Digitalisierung und dem Vergleich der Meßwerte während des Sensorbetriebs ohne Fehlverhalten identische Bitmuster in den Ausgangsbereichen 262, 272 sichergestellt. Zur Weiterleitung der Sensorwerte an die Steuerung 600 einer Baumaschine genügt die Übertragung des vereinheitlichten Meßwerts.

Liegen die Abweichungen außerhalb des vorgegebenen Toleranzbereichs, so wird die Messung allgemein als fehlerhaft erachtet, die Meßwerte entsprechend gekennzeichnet und mitsamt der Kennzeichnung in den Ausgangsbereich 262, 272 der beiden Verarbeitungseinheiten 260, 270 abgelegt.

Zum Anschluß an das Bussystem 290 weist der Sensor 200 die Anschlußstelle 280 auf, die sich innerhalb des Gehäuses 201 in die beiden Zweigbusse 280a, 280b aufteilt. Die beiden Verarbeitungseinheiten 260, 270 sind über die Zweigbusse 280a, 280b mit der Busleitung 290 des Bussystems verknüpft.

Figur 2 zeigt den schematischen Aufbau des erfindungsgemäßen Steuersystems 500. Das System 500 besteht im Wesentlichen aus dem Sensor 200, dem Bussystem 290 und der Steuerung 600, wobei das System 500 ohne weiteres aus einer unbestimmten Anzahl an Sensoren 200 und Steuerungen 600 bestehen kann.

Jeder Sensor 200 weist eine für ihn eindeutige und individuelle Kennzeichnung auf, die sowohl im ersten Kanal bzw. in der Verarbeitungseinheit 260 des Sensors 200 als auch im zweiten Kanal bzw. in der Verarbeitungseinheit 270 abgelegt ist. Diese Kennzeichnung wird im Folgenden als individuelle Sensorbeschreibung verstanden, aus der über einen spezifizierten Algorithmus der individuelle Schlüssel des Sensors 200 berechnet wird.

Ferner wird der Status eines jeden Sensors 200 über die Sensorzustandsbeschreibung definiert. Diese wird über entsprechende Diagnoseverfahren intern in jedem Kanal bzw. jeder Verarbeitungseinheit 260, 270 ermittelt.

Der Sensor 200 ist über das Bussystem 290 mit der Steuerung 600 einer Baumaschine verbunden. Das Bussystem 290 ist beispielweise, wie aus der DE 196 47 131 C2 bekannt, als Liebherr-System-Bus ausgeführt. Die Steuerung 600 ist zweikanalig über die Steuereinheiten 610 und 620 ausgeführt. Um die Anzahl der Busteilnehmer klein zu halten, ist nur die Steuereinheit 610 der Steuerung 600 als Busmaster ausgeführt und empfängt die übertragenen Daten mittels ihrer Empfangseinheit 611. Denkbar ist es auch, eine Ausgestaltung des Steuersystems 500 mit mehreren Busmastern, die für unterschiedliche Aufgabenbereiche des Steuersystems 500 verantwortlich sind, einzusetzen.

Die vorgenannte individuelle Sensorbeschreibung wird zyklisch durch den Busmaster der Steuereinheit 610 abgefragt. Hierdurch ist sichergestellt, dass der Sensor 200 als aktiv und funktionsfähig überprüft wird. Gleiches gilt für die Sensorzustandsbeschreibung, die ebenfalls zyklisch durch ein eigenständiges Protokoll vom Busmaster abgefragt wird, wobei die Wiederholungsrate des Abfragezyklus variabel an die jeweiligen Sicherheitsanforderungen angepaßt werden kann.

Der Meßwert des Sensors 200 wird ausschließlich auf Anforderung des Busmasters mehrfach an die Steuerung 600 bzw. an die Empfangseinheit 611 der Steuereinheit 610 übertragen. Benötigt die Steuerung 600 Daten von Sensor 200, dann legt der Busmaster die Abfragen auf den Bus 290, indem er die unterschiedlichen Protokolle anstößt.

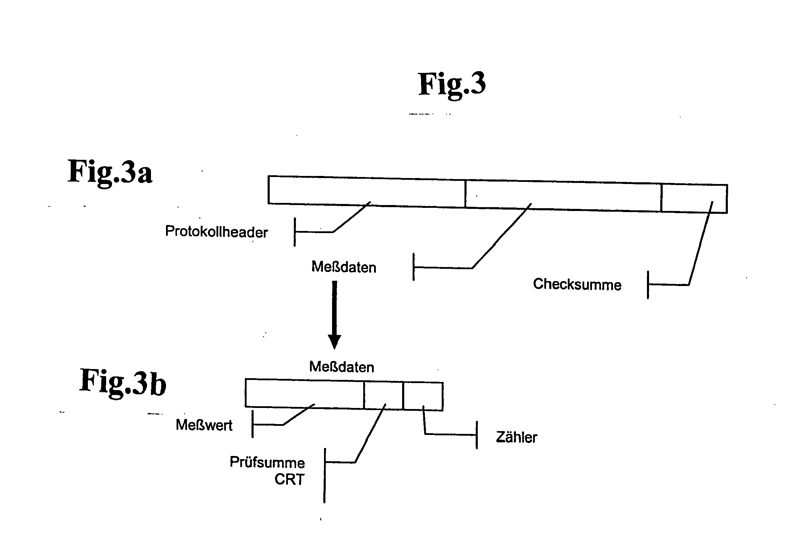

Zur Übertragung des Meßwerts dient das dazu definierte Meßwertprotokoll, wie es der Figur 3b zu entnehmen ist. Dieses beinhaltet den Meßwert, einen Zeitstempel und eine codierte Sicherheitsinformation, die als Funktion aus dem Meßwert, dem Zeitstempel sowie dem individuellen Schlüssel des Sensors berechnet wird.

Die Verarbeitungseinheit 260 reagiert auf die empfangene Anforderung des Busmasters mit der Übermittlung des im Ausgangsbereich 262 abgelegten Meßwerts bzw. der individuellen Sensorbeschreibung oder der Sensorzustandsbeschreibung. Zur Übertragung des Meßwerts wird die Sicherheitsinformation berechnet und das gesamte Datenpaket des Meßwertprotokolls in das Gesamtprotokoll (Figur 3a) des Bussystems 290 verpackt und auf den Bus 290 gelegt. Während des Sendeprozesses überprüft die Verarbeitungseinheit 260 gleichzeitig das von ihr auf den Bus 290 gelegte Sendesignal auf Richtigkeit. Analog dazu verfährt die Verarbeitungseinheit 270, wobei diese ausschließlich das von der Verarbeitungseinheit 260 auf den Systembus gelegte Signal auf Richtigkeit überprüft, indem das Signal mit ihrem Erwartungswert, also dem im Ausgang 272 abgelegten Meßwert bzw. ihrer individuellen Sensorbeschreibung oder Sensorzustandsbeschreibung, verglichen wird. Identifiziert eine der überprüfenden Verarbeitungseinheiten 260, 270 einen Übertragungsfehler, so macht die Verarbeitungseinheit 260, 270 das Protokoll ungültig, zum Beispiel beim Liebherr-Systembus durch Ziehen des Bussignals auf Masse für eine bestimmte Zeit, insbesondere 512 µs. Die Zeitspanne charakterisiert ein entsprechendes Timeout des Liebherr-Systembusprotokolls, so dass sämtliche vom Bus übertragenen Sendesignale von den einzelnen Empfangseinheiten verworfen werden.

Generell gilt es, dass alle Busteilnehmer, d.h. die Beobachter, Busmaster und alle Sensoren die Inhalte der übermittelten Daten mithören können. Für jeden Sensor 200 sind im Busmaster sowie den Beobachtern definierte und stets gleiche Bereiche in den lokalen Datenfeldern, nämlich den Feldern BW und XW, vorgesehen. Die übermittelten Nutzdaten, also das Meßwertprotokoll, werden in das lokale Datenfeld BW, das in die Werte Meßwert, Zeitstempel und Sicherheitsinformation gegliedert ist, gespeichert. Jeder Busteilnehmer liest also die auf den Bus 290 gelegten Daten mit und befüllt entsprechend sein lokales Datenfeld. Die Antwort des Sensors 200 auf die Statusabfrage wird im Datenfeld XW abgelegt und weiter mit dem individuellen Schlüssel des zugehörigen Sensors ergänzt. Demnach wird der Schlüssel lokal in jedem Empfänger über einen spezifizierten Algorithmus selbständig berechnet.

Im Ausführungsbeispiel der Figur 2 empfängt die Steuereinheit 610 mittels der Empfangseinheit 611 die übermittelten Daten. Die vorgenannten Übertragungsprotokolle sind zusätzlich in das Gesamtprotokoll (Figur 3a) des Bussystems 290 verpackt, das über eine Prüfsumme gesichert ist. Die Steuereinheit 610 füllt ihre lokalen Datenfelder BW und XW mit den übertragenen Daten und führt über das Mittel 615 die Sicherheits- bzw. Schutzfunktion zur Verifizierung der Sensordaten aus. Hierdurch lässt sich zum einen die Richtigkeit der Daten feststellen und zum anderen vorzugsweise eine Korrektur der Übertragungsfehler durchführen. Zur Verifizierung der Daten werden die Inhalte beider Datenfelder benötigt und miteinander innerhalb des Mittels 615 verarbeitet.

Im Anschluß leitet die Steuereinheit 610 Kopien der Inhalte seiner Datenfelder BW und XW an die redundant bzw. diversitär angeordnete Steuereinheit 620 weiter. Die Weiterleitung erfolgt über ein beliebiges internes Bussystem, wie beispielsweise SPI, CAN, LAN, LSB, und die lokalen Datenfelder der Steuereinheit 620 werden mit den Datenkopien belegt. Die Ausführung der Sicherheits- bzw. Schutzfunktion erfolgt analog zur Steuereinheit 610 mit Hilfe des Mittels 625. Beide Steuereinheiten bestätigen die Richtigkeit der empfangenen Daten infolge einer erfolgreichen Verifizierung.

Die Schutz- bzw. Sicherheitsfunktion beruht bevorzugt auf der Durchführung bekannter Sicherheitsalgorithmen bzw. Restaurationsalgorithmen, wie beispielweise CRC oder CRT-Algorithmen.

Durch die redundante und/oder diversitäre Auslegung der Steuerung gelangen die geprüften Meßdaten über verschiedene Pipelinestrukturen zur verarbeitenden Logik des Steuersystems. Werden die verschlüsselten Meßdaten durch die Pipelinestruktur verfälscht, dann erkennt die verarbeitende Steuerung 600 diese Fehler. Eventuell kann die Steuerung 600 diese Fehler sogar beheben, wenn der Sicherungsalgorithmus und der Restaurationsalgorithmus geeignet gewählt wurden.

Im Beispiel aus Figur 2 ist noch der mögliche Anschluß weiterer Steuereinheiten 630 der Steuerung 600 angedeutet. Das gezeigte Steuersystem 500 ist nicht auf eine einzige Steuerung 600 begrenzt. Denkbar sind Anwendungen mit mehreren Steuerungen, mehreren Sensoren und Beobachtern, wobei alle Sensoren und alle Steuerungen gemäß den vorgenannten Ausführungsmöglichkeiten beschaffen sind.

Das Ausführungsbeispiel des Sensors 200 dient zur meßtechnischen Erfassung eines Drucks innerhalb einer Leitung 1. Eine derartige Ausgestaltung des Sensors 200 ist jedoch nicht auf die Messung des Parameters Druck beschränkt. Weitere Ausführungen des Sensors 200 sehen dabei die Messung eines Winkels, Drehung, Neigung, Länge, Entfernung, Schall, Helligkeit, Feuchtigkeit, Richtung oder Füllstand vor. Hierzu müssen lediglich die beiden verwendeten Meßwertaufnehmer 220, 230 an das entsprechende Medium angepaßt und die Prüflingszuführung 210 abgeändert werden. Mögliche Ausführungen sind ein Seillängengeber, Lasersensor, Drehwinkelmesser, Neigungsmesser und Längenmesser über Drehgeber.

## Patentansprüche

1. Steuersystem für eine Baumaschine, mit wenigstens einem Sensor und wenigstens einer Steuerung, wobei eine serielle Verbindung zwischen Sensor und der Steuerung besteht,
**dadurch gekennzeichnet,**
**dass** mindestens ein Sensor und/oder eine Steuerung zwei- oder mehrkanalig ausgeführt sind, dass innerhalb wenigstens eines Sensors wenigstens zwei Meßwertaufnehmer und/oder wenigstens zwei Verarbeitungseinheiten redundant und/oder diversitär zueinander angeordnet sind und dass wenigstens zwei Verarbeitungseinheiten des Sensors miteinander gekoppelt sind und/oder eine Datenverbindung zwischen den Verarbeitungseinheiten besteht.

2. Steuersystem für eine Baumaschine gemäß Anspruch 1, **dadurch gekennzeichnet, dass** ein oder mehrere Sekundärsensoren, insbesondere Temperatursensoren und/oder Drucksensoren, innerhalb des Sensors angeordnet sind.

3. Steuersystem für eine Baumaschine gemäß einem der Ansprüche 1 oder 2, **dadurch gekennzeichnet, dass** wenigstens eine Steuerung wenigstens zwei redundant und/oder diversitär zueinander angeordnete Steuereinheiten umfaßt.

4. Steuersystem für eine Baumaschine gemäß einem der Ansprüche 1 bis 3 **dadurch gekennzeichnet, dass** die serielle Verbindung zwischen wenigstens einem Sensor und wenigstens einer Steuerung ein Bussystem, insbesondere CAN-Bussystem, Liebherr-System-Bus oder Ethernet basierendes Bussystem, ist.

5. Steuersystem für eine Baumaschine gemäß einem der Ansprüche 1 bis 4 **dadurch gekennzeichnet, dass** Mittel innerhalb wenigstens eines Sensors zur Verschlüsselung bzw. Verpackung des zu übertragenden Meßwerts und Mittel innerhalb wenigstens einer Steuereinheit der Steuerung zum Entschlüsseln bzw. Entpacken des Meßwerts vorgesehen sind.

6. Steuersystem für eine Baumaschine gemäß einem der Ansprüche 1 bis 5 **dadurch gekennzeichnet, dass** wenigstens ein Sensor einen der Meßparameter Druck, Winkel, Drehung, Neigung, Länge, Entfernung, Schall, Helligkeit, Feuchtigkeit, Richtung oder Füllstand erfaßt.

7. Verfahren zum Betrieb eines Steuersystems für eine Baumaschine gemäß einem der Ansprüche 1 bis 6, **dadurch gekennzeichnet, dass**
a. eine Meßgröße von wenigstens einem Sensor redundant und/oder diversitär erfaßt wird,
b. der Meßwert wenigstens eines Sensors in einem Datenpaket des Meßwertprotokolls abgelegt wird und durch das Mittel des Sensors mit einer Sicherheits- und/oder Schutzfunktion versehen wird,
c. das Datenpaket über die serielle Verbindung an eine Steuerung übermittelt wird und
d. das Datenpaket bzw. der Meßwert durch die redundant und/oder diversitär ausgelegte Steuerung mittels der Sicherheits- und/oder Schutzfunktion auf Richtigkeit überprüft wird.

8. Verfahren nach Anspruch 7, **dadurch gekennzeichnet, dass** für jeden Kanal eines Sensors eine individuelle Sensorbeschreibung gespeichert ist, die vorzugsweise zyklisch durch die Steuerung abgefragt wird, wobei insbesondere aus der Sensorbeschreibung mittels eines Algorithmus ein individueller Schlüssel berechnet wird.

9. Verfahren nach Anspruch 7 oder 8, **dadurch gekennzeichnet, dass** wenigstens eine Steuerung zyklisch eine Statusabfrage für jeden Sensor initiiert und jeder Sensor als Antwort seine Sensorzustandsbeschreibung über das Bussystem an die anfragende Steuerung übermittelt.

10. Verfahren nach Anspruch 7, 8 oder 9, **dadurch gekennzeichnet, dass** die Steuerung den Meßwert wenigstens eines Sensors mittels des Meßwertprotokolls anfordert.

11. Verfahren nach einem der Ansprüche 7 bis 10, **dadurch gekennzeichnet, dass** zur Verifizierung der übermittelten Datenpakete, insbesondere der Meßwerte und der Sensorzustandsbeschreibung, die Sicherheits- und/oder Schutzfunktion, insbesondere der individuelle Schlüssel, verwendet wird.

12. Verfahren nach einem der Ansprüche 7 bis 11, **dadurch gekennzeichnet, dass** eine Steuereinheit der Steuerung die Daten wenigstens eines Sensors über das Bussystem empfängt und Kopien der Daten an alle weiteren Steuereinheiten der Steuerung weiterleitet.

13. Verfahren nach Anspruch 12, **dadurch gekennzeichnet, dass** jede Steuereinheit die empfangenen Sensordaten bzw. die Datenkopien mittels der Sicherheits- und/oder Schutzfunktion verifiziert.
